# FASCICULE DE BREVET EUROPEEN

(11) **EP 2 732 137 B1**
(45) Date de publication et mention de la délivrance du brevet: **28.09.2016**
(21) Numéro de dépôt: 12743482.7
(22) Date de dépôt: 29.06.2012
(51) Int. Cl.: F01D 19/02, F02C 7/26, F02C 7/264, F02C 7/268

(54) **PROCEDE DE DEMARRAGE D'UNE TURBOMACHINE REDUISANT LE BALOURD THERMIQUE**
VERFAHREN ZUM ANZÜNDEN EINER TURBOMASCHINE DER UNWUCHT ERNIEDRINGEND
METHOD FOR STARTING A TURBOMACHINE REDUCING THE THERMAL UNBALANCE

(30) Priorité: 12.07.2011 FR 1156342
(43) Date de publication de la demande: 21.05.2014
(73) Titulaire: Turbomeca, 64510 Bordes (FR)
(72) Inventeur: MOUZE, Yann, F-64420 Limendous (FR); BATLLE, Frédéric, Ferdinand, Jacques, F-64140 Lons (FR); HAEHNER, Edgar, F-64510 Bordes (FR); SEGURA, Frédéric, F-64230 Lescar (FR)
(74) Mandataire: David, Alain
(86) Numéro de dépôt international: PCT/FR2012/051508
(87) Numéro de publication internationale: WO 2013/007912

(56) Documents cités:
- EP-A2- 2 339 145
- US-A1- 2010 293 961

## Description

### Arrière-plan de l'invention

La présente invention se rapporte au domaine général des turbomachines. La présente invention concerne en particulier la prise en compte du balourd thermique lors du démarrage d'une turbomachine.

Le balourd thermique est un balourd temporaire qui s'installe sur le rotor d'une turbomachine après l'arrêt de celle-ci. L'air chaud étant plus léger que l'air froid, une hétérogénéité des températures se met en place dans la veine, ce qui crée par effet bilame une mise en flèche du rotor. Le balourd thermique peut être plus de cent fois supérieur au balourd résiduel du rotor.

Or, une turbomachine doit franchir une ou plusieurs vitesses critiques avant d'atteindre sa vitesse de fonctionnement. Ainsi, lors du franchissement des vitesses critiques pendant le redémarrage de la turbomachine, le balourd thermique peut avoir pour conséquence de fortes vibrations, ce qui peut altérer la fiabilité de la turbomachine. Le balourd thermique peut également avoir pour conséquence des touches stator/rotor qui peuvent altérer la tenue mécanique des composants impliqués.

Plusieurs solutions connues visent à réduire les effets indésirables du balourd thermique :
- Interdiction de redémarrer la turbomachine pendant un certain temps après son arrêt.
- Procédures spécifiques réalisées pendant l'arrêt ou avant le redémarrage, visant à diminuer l'hétérogénéité de température (ventilation, rotations successives du moteur, injection d'un flux d'air dans la veine,...)
- Ouverture des jeux stator/rotor pour empêcher les touches pendant le redémarrage de la turbomachine.
- Adaptation de l'architecture pour limiter les effets du balourd thermique.

Ces solutions connues présentent toutefois certains inconvénients :
- L'interdiction de redémarrer pendant un certain temps pénalise la disponibilité de la turbomachine.
- Les procédures spécifiques nécessitent une intervention d'un opérateur, par exemple du pilote dans le cas d'une turbomachine d'aéronef.
- L'ouverture des jeux stator/rotor se fait au détriment des performances de la turbomachine.
- L'adaptation de l'architecture se fait au détriment de la masse de la turbomachine.

Par exemple, le document FR 2 185 753 décrit l'injection d'air comprimé dans la veine, par un canal prévu à cet effet. Ce document mentionne égaiement d'autres solutions, notamment la mise en rotation de la turbomachine par un vireur, avant son redémarrage. Cette dernière solution implique l'intervention d'un opérateur avant le redémarrage. Voir aussi EP 2 339 145 A2.

Il existe donc un besoin d'une solution plus efficace pour le démarrage d'une turbomachine susceptible d'être affectée par un balourd thermique.

### Objet et résumé de l'invention

L'invention propose de répondre à ce besoin en proposant un procédé de démarrage ou de redémarrage d'une turbomachine, mis en oeuvre par une unité électronique, la turbomachine comprenant un moteur à turbine à gaz incluant au moins un rotor et un démarreur apte à entraîner le rotor en rotation, le procédé de démarrage comprenant :
- une étape de réception d'un ordre de démarrage de la turbomachine, et, en réponse à la réception de l'ordre de démarrage :
- une étape d'accélération primaire dans laquelle on commande le démarreur pour augmenter la vitesse de rotation du rotor,
- une étape d'homogénéisation thermique dans laquelle on commande le démarreur pour maintenir constante ou diminuer la vitesse de rotation du rotor, jusqu'à la vérification d'une condition prédéterminée,
- après vérification de la condition prédéterminée, une étape d'accélération secondaire dans laquelle on commande le démarreur pour augmenter la vitesse de rotation du rotor, et
- une étape d'allumage dans laquelle on commande l'allumage du moteur.

Comme la vitesse de rotation n'augmente plus après l'étape d'accélération primaire, le balourd thermique ne produit pas de vibrations inacceptables pendant l'étape d'accélération primaire et l'étape d'homogénéisation thermique. De plus, pendant l'étape d'homogénéisation thermique, les échanges convectifs forcés dans le moteur homogénéisent les températures et réduisent donc le balourd thermique. Ainsi, lorsque la vitesse de rotation augmente à nouveau pendant la phase d'accélération secondaire, le balourd thermique est réduit et ne génère pas non plus de vibrations inacceptables.

De plus, les étapes d'accélération primaire, d'homogénéisation thermique et d'accélération secondaire sont effectuées par l'unité électronique automatiquement, en réponse à la réception de l'ordre de démarrage. Autrement dit, les étapes du procédé de démarrage qui permettent de réduire le balourd thermique sont intégrées dans le processus de démarrage du moteur, géré par l'unité électronique. A part donner l'ordre de démarrage, aucune autre opération n'est donc à effectuer par un opérateur.

Dans un mode de réalisation, l'étape d'accélération primaire est effectuée jusqu'à atteindre une vitesse de rotation prédéterminée.

La vitesse de rotation prédéterminée peut être inférieure à une première vitesse de rotation critique de la turbomachine.

En raison de la réduction du balourd thermique pendant l'étape d'homogénéisation thermique, la vitesse de rotation peut ensuite dépasser la vitesse de rotation prédéterminée pendant l'étape d'accélération secondaire.

Dans un mode de réalisation, la condition prédéterminée est l'écoulement d'une durée prédéterminée depuis le début de l'étape d'homogénéisation thermique.

Cette durée prédéterminée est par exemple comprise entre 5 et 60 secondes.

Dans un autre mode de réalisation, l'étape d'accélération primaire est effectuée jusqu'à détecter un niveau de vibration supérieur ou égal à un premier niveau prédéterminé, ladite condition prédéterminée étant la détection d'un niveau de vibration inférieur ou égal à un deuxième niveau prédéterminé inférieur au premier niveau prédéterminé.

Lors de l'étape d'homogénéisation thermique, on peut commander le démarreur pour maintenir constante la vitesse de rotation du rotor.

Dans une variante, lors de l'étape d'homogénéisation thermique, on commande le démarreur pour cesser d'entraîner le rotor en rotation.

De manière correspondante, l'invention propose également :
- Un programme d'ordinateur comprenant des instructions pour la mise en oeuvre d'un procédé de démarrage conforme à l'invention lorsque ce programme d'ordinateur est exécuté par un ordinateur.
- Une unité électronique comprenant une mémoire dans laquelle est mémorisé un programme d'ordinateur conforme à l'invention.
- Une turbomachine comprenant une unité électronique conforme à l'invention, un moteur à turbine à gaz incluant au moins un rotor et un démarreur apte à entraîner le rotor en rotation.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une représentation schématique d'une turbomachine selon un mode de réalisation de l'invention,
- les figures 2 à 5 sont des graphes représentant l'évolution de la vitesse de rotation de la turbomachine de la figure 1 lors de son démarrage, en fonction du temps, selon plusieurs variantes de réalisation de l'invention, et
- la figure 6 est un diagramme qui représente les principales étapes d'un procédé de démarrage selon un mode de réalisation de l'invention.

### Description détaillée de l'invention

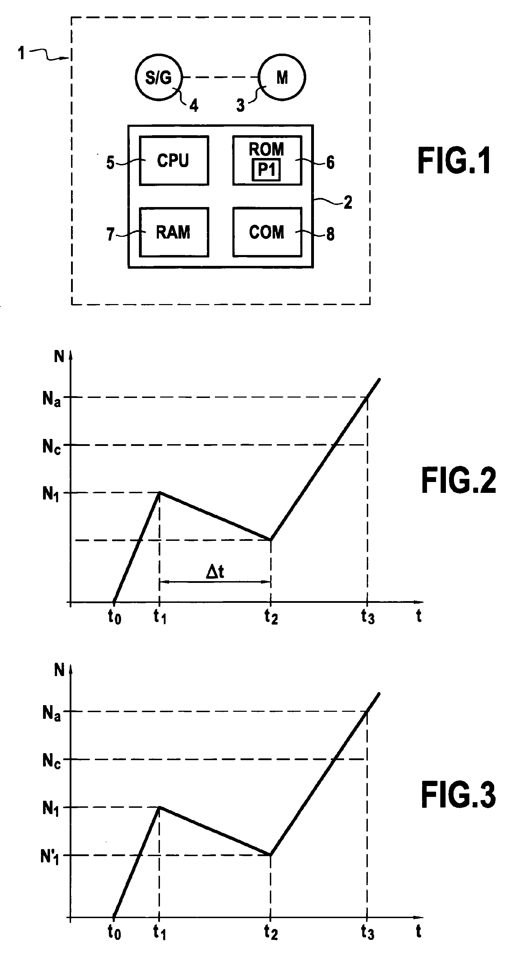

La **figure 1** représente une turbomachine 1 qui comprend une unité électronique 2, un moteur 3 et un démarreur 4. Dans une réalisation de l'invention, la turbomachine 1 est un turbomoteur d'hélicoptère. Ce type de turbomoteur est connu de l'homme du métier et il ne sera donc pas décrit en détails. L'invention est toutefois applicable à d'autres types de turbomachines pour aéronefs, notamment à un turboréacteur, un turboréacteur à double corps et double flux, un turbopropulseur... ou des turbomachines industrielles...

Le moteur 3 est un moteur à turbines à gaz qui comprend au moins un rotor. Ci-après, on note N la vitesse de rotation du rotor. Dans le cas précité d'un turboréacteur à double corps, double flux, le moteur 3 comprend deux rotors et N désigne la vitesse de rotation d'un des deux rotors.

Le démarreur 4 est par exemple un moteur électrique couplé au moteur 3 et qui peut entraîner le rotor du moteur 3 en rotation. Le démarreur 4 peut également servir de générateur électrique lorsqu'il est entraîné en rotation par le moteur 3.

L'unité électronique 2 commande le fonctionnement général de ia turbomachine 1, notamment en mettant en oeuvre une boucle de régulation principale pour asservir le régime ou la poussée de la turbomachine 1. L'unité électronique 2 est typiquement connue par l'homme du métier sous le nom de FADEC (pour « *Full Authority Digital Engine Control* ») ou de EEC (pour « *Electronic Engine Controller »).*

L'unité électronique 2 présente l'architecture matérielle d'un ordinateur et comprend notamment un processeur 5, une mémoire non-volatile 6, une mémoire volatile 7 et une interface 8. Le processeur 5 permet d'exécuter des programmes d'ordinateur mémorisés dans la mémoire non-volatile 6, en utilisant la mémoire volatile 7 comme espace de travail. L'interface 8 permet d'acquérir des signaux représentatifs du fonctionnement de la turbomachine 1 et d'envoyer des signaux de commande.

Ainsi, l'unité électronique 2 peut notamment acquérir un signal représentatif de la vitesse de rotation N du rotor, un signal représentatif d'un niveau de vibrations S dans le moteur 3, fourni par un capteur de vibration (par exemple un accéléromètre), et un signal représentatif d'un ordre de démarrage DEM, fourni par exemple par un organe de commande manipulable par un opérateur (le pilote dans le cas d'un turbomoteur d'aéronef). L'unité électronique 2 peut également commander, entre autres, le démarreur 4 et l'allumage du moteur 3.

En référence à la **figure 2****,** on décrit maintenant un premier exemple de procédé de démarrage de la turbomachine 1. La figure 2 est un graphe qui représente l'évolution de la vitesse de rotation N en fonction du temps t.

A l'instant t₀, l'unité électronique 2 reçoit un ordre de démarrage de la turbomachine 1. L'unité électronique 2 commande alors le démarreur 4 de manière à entraîner le rotor et à augmenter progressivement sa vitesse de rotation N jusqu'à atteindre, à l'instant t₁, une vitesse de rotation N₁ prédéterminée. La vitesse de rotation N₁ est inférieure à la première vitesse de rotation critique N_{c} du rotor.

Ensuite, l'unité électronique 2 commande le démarreur 4 de manière à cesser d'entraîner le rotor pendant une durée Δt prédéterminée. La durée Δt prédéterminée est par exemple comprise entre 5 et 60 secondes. En raison de la puissance aérodynamique dissipée, la vitesse de rotation N diminue. Pendant cette durée prédéterminée, les échanges convectifs forcés dans ie moteur 3 homogénéisent les températures et réduisent donc le balourd thermique.

Après l'écoulement de la durée Δt prédéterminée, à l'instant t₂, l'unité électronique 2 commande le démarreur 4 de manière à entraîner le rotor et à augmenter progressivement sa vitesse de rotation N jusqu'à dépasser les vitesses de rotation N₁ et N_{c} et à atteindre, à l'instant t₃, une vitesse de rotation Nₐ prédéterminée.

Ensuite, à l'instant t₃, l'unité électronique 2 commande l'allumage du moteur 3.

Entre l'instant t₀ et l'instant t₂, la vitesse de rotation N est toujours inférieure ou égale à la vitesse de rotation N₁, elle-même inférieure à la vitesse de rotation N_{c}. Ainsi, le balourd thermique ne produit pas de vibrations inacceptables. De plus, entre les instants t₁ et t₂, les échanges convectifs forcés dans le moteur 3 homogénéisent les températures et réduisent donc le balourd thermique. Ainsi, lorsque la vitesse de rotation N augmente à partir de l'instant t₂, le balourd thermique est réduit et ne génère pas non plus de vibrations inacceptables.

La **figure 3** est similaire à la figure 2 et illustre un deuxième exemple de procédé de démarrage de la turbomachine 1. Ce deuxième exemple est similaire au premier exemple de la figure 2. Il s'en distingue par le fait que, après l'instant t₁, l'unité électronique 2 commande le démarreur 4 de manière à cesser d'entraîner le rotor jusqu'à détecter, à l'instant t₂, que la vitesse de rotation N est inférieur ou égale à une vitesse de rotation N₁' prédéterminée. La vitesse N₁' est inférieure à la vitesse N₁. Autrement dit, l'instant t₂ est déterminé sur la base d'un seuil de vitesse et non de l'écoulement d'une durée prédéterminée.

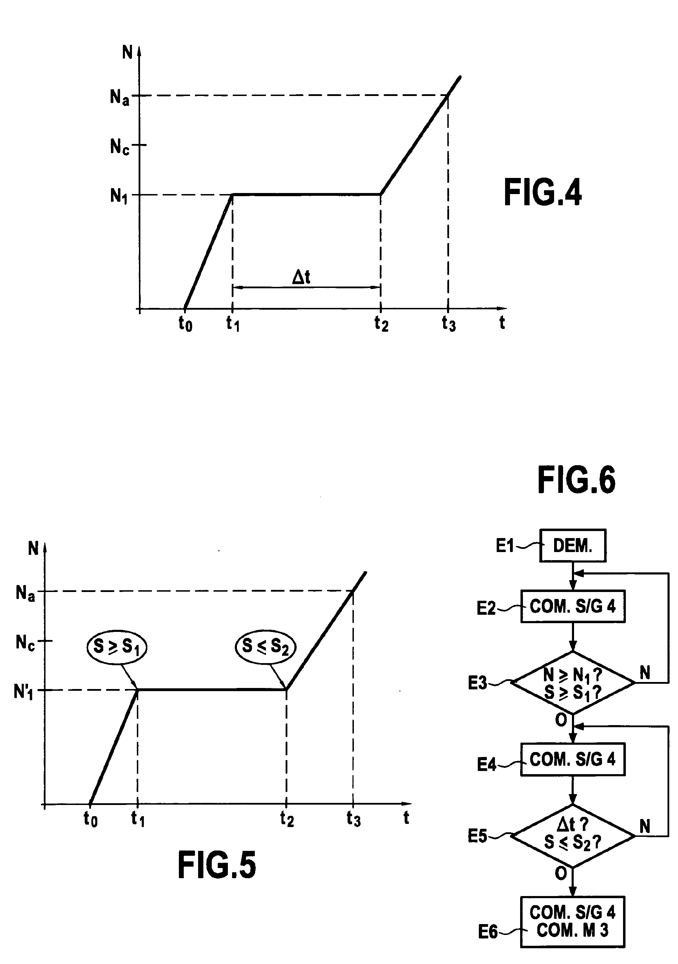

La **figure 4** est similaire à la figure 2 et illustre un troisième exemple de procédé de démarrage de la turbomachine 1. Ce troisième exemple est similaire au premier exemple de la figure 2. Il s'en distingue par le fait que, pendant la durée Δt prédéterminée, c'est-à-dire entre les instants t₁ et t₂, l'unité électronique 2 commande le démarreur 4 de manière à maintenir la vitesse de rotation N constante et égale à N₁.

Comme dans le cas des figures 2 et 3, la vitesse de rotation N est limitée avant l'instant t₂ et le balourd thermique est réduit après l'instant t₂ en raison des échanges convectifs forcés dans le moteur 3. On évite ainsi des vibrations inacceptables.

La **figure 5** est similaire à la figure 2 et représente l'évolution de la vitesse de rotation N en fonction du temps t dans un quatrième exemple de procédé de démarrage de la turbomachine 1.

A l'instant t₀, l'unité électronique 2 reçoit un ordre de démarrage de la turbomachine 1. L'unité électronique 2 commande donc le démarreur 4 de manière à entraîner le rotor et à augmenter progressivement sa vitesse de rotation N jusqu'à détecter, à l'instant t₁, un niveau de vibration S supérieur ou égal à un seuil prédéterminé S₁. La vitesse de rotation N à l'instant t₁ est notée N₁'. Un choix approprié du seuil S₁ permet d'assurer que N₁' est inférieure à la première vitesse de rotation critique N_{c} du rotor.

Ensuite, l'unité électronique 2 commande le démarreur 4 de manière à maintenir la vitesse de rotation N constante et égale à N₁', jusqu'à détecter, à un instant t₂, que le niveau de vibration S est inférieur ou égal à un seuil prédéterminé S₂. Le seuil S₂ est inférieur au seuil S₁.

Ensuite, l'unité électronique 2 commande le démarreur 4 de manière à entraîner le rotor et à augmenter progressivement sa vitesse de rotation N jusqu'à dépasser les vitesses de rotation N₁' et N_{c} et à atteindre, à l'instant t₃, une vitesse de rotation Nₐ prédéterminée.

A l'instant t₃, l'unité électronique 2 commande alors l'allumage du moteur 3.

Le procédé de démarrage de la figure 4 est itératif. Autrement dit, si après l'instant t₂ on atteint de nouveau le seuil S1, l'unité électronique 2 commande de nouveau le démarreur 4 de manière à maintenir la vitesse de rotation N constante et égale à N₁', jusqu'à détecter que le niveau de vibration S est inférieur ou égal à au seuil S₂.

Comme dans le cas des figures 2 à 4, la vitesse de rotation N est limitée avant l'instant t₂ et le balourd thermique est réduit après l'instant t₂ en raison des échanges convectifs forcés dans le moteur 3. On évite ainsi des vibrations inacceptables.

Le déroulement du procédé de démarrage illustré sur les figures 2 à 5 peut correspondre à l'exécution, par le processeur 5, d'un programme d'ordinateur P1 mémorisé dans la mémoire non-volatile 6. La **figure 6** représente les principales étapes de ce procédé de démarrage, mis en oeuvre par l'unité électronique 2 lors de l'exécution du programme d'ordinateur P1.

Le procédé de démarrage débute à l'étape E1 au cours de laquelle l'unité électronique 2 reçoit un ordre de démarrage. L'étape E1 correspond à l'instant t₀ des figures 2 à 4. Les étapes E2 à E6 qui suivent sont effectuées en réponse à la réception de l'ordre de démarrage.

A l'étape E2, l'unité électronique 2 commande le démarreur 4 de manière à entraîner le rotor et à augmenter progressivement sa vitesse de rotation N. A l'étape E3, l'unité électronique 2 teste une condition de transition vers l'étape E4. Dans le cas des figures 2 à 4, la condition de transition est N ≥ N₁. Dans le cas de la figure 5, la condition de transition est S ≥ S₁. Dans une autre variante (non représentée), la condition est l'écoulement d'une durée prédéterminée. Le procédé de démarrage boucle à l'étape E2 tant que la condition de transition n'est pas vérifiée.

Les étapes E2 et E3 correspondent à une étape d'accélération primaire d'un procédé de démarrage conforme à l'invention.

Lorsque la condition de transition de l'étape E3 est vérifiée, ce qui correspond à l'instant t₁ des figures 2 à 5, le procédé de démarrage se poursuit à l'étape E4. Au cours de l'étape E4, l'unité électronique 2 commande le démarreur 4 de manière à cesser d'entraîner le rotor (cas des figures 2 et 3) ou à maintenir la vitesse de rotation N constante (cas des figures 4 et 5).

A l'étape E5, l'unité électronique 2 teste une condition prédéterminée. Dans le cas des figures 2 et 4, la condition prédéterminée est l'écoulement de la durée Δt prédéterminée depuis la fin de l'étape E3. Dans le cas de la figure 3, la condition prédéterminée est N ≤ N₁'. Dans le cas de la figure 5, la condition prédéterminée est S ≤ S₂. Le procédé de démarrage boucle à l'étape E4 tant que la condition prédéterminée n'est pas vérifiée.

Les étapes E4 et E5 correspondent à une étape d'homogénéisation thermique d'un procédé de démarrage conforme à l'invention.

Lorsque la condition prédéterminée de l'étape E5 est vérifiée, ce qui correspond à l'instant t₂ des figures 2 à 4, le procédé de démarrage se poursuit à l'étape E6. Au cours de l'étape E6, l'unité électronique 2 commande le démarreur 4 de manière à entraîner le rotor et à augmenter progressivement sa vitesse de rotation N jusqu'à dépasser les vitesses de rotation N₁ (ou N₁') et N_{c} et à atteindre, à l'instant t₃, la vitesse de rotation Nₐ prédéterminée. L'unité électronique 2 commande alors l'allumage du moteur 3, ce qui implique l'injection de carburant et l'allumage de la chambre de combustion de la turbomachine.

L'étape E6 correspond à une étape d'accélération secondaire et à une étape d'allumage d'un procédé de démarrage conforme à l'invention.

Comme expliqué précédemment en références aux figures 2 à 5, le procédé de démarrage décrit permet d'éviter des vibrations indésirables qui peuvent être provoquées par le balourd thermique. Il n'est pas nécessaire d'attendre une durée prédéterminée après l'arrêt de la turbomachine 1 pour redémarrer le moteur 3. La solution proposée ne nécessite pas une architecture spécifique du moteur 3 ni l'ouverture des jeux stator/rotor.

De plus, les étapes E2 à E6 sont effectuées par l'unité électronique 2 automatiquement, en réponse à la réception de l'ordre de démarrage à l'étape E1. A part donner l'ordre de démarrage, le pilote n'a donc aucune autre opération à effectuer. En effet, les étapes E2 à E6 du procédé de démarrage sont intégrées dans le processus de démarrage du moteur 3, géré par l'unité électronique 2 lors de l'exécution du programme d'ordinateur P1.

Dans une variante de réalisation, les étapes E2 à E6 sont mises en oeuvre autrement que par une unité électronique incluant un processeur qui exécute un programme d'ordinateur. Par exemple, l'unité électronique peut être un automate de type séquenceur à relais configuré pour la mise en oeuvre des étapes E2 à D6 en réponse à la réception d'un ordre de démarrage.

Dans un mode de réalisation, les étapes E2 à E6 sont précédées d'une étape de test de l'état thermique de la turbomachine. Dans ce cas, si l'état thermique de la turbomachine indique la présence d'un balourd thermique, les étapes E2 à E6 sont exécutées comme décrit précédemment. Par contre, si l'état thermique indique l'absence de balourd thermique (moteur froid), le démarrage de la turbomachine est commandé sans passer par les étapes E2 à E6.

## Revendications

1. Procédé de démarrage ou de redémarrage d'une turbomachine (1), mis en oeuvre par une unité électronique (2), la turbomachine (1) comprenant un moteur (3) à turbine à gaz incluant au moins un rotor et un démarreur (4) apte à entraîner le rotor en rotation, **caractérisé en ce qu'**il comprend, en réponse à la réception d'un ordre de démarrage :
- une étape (E2, E3) d'accélération primaire dans laquelle on commande le démarreur (4) pour augmenter la vitesse de rotation (N) du rotor,
- une étape (E4, E5) d'homogénéisation thermique dans laquelle on commande le démarreur (4) pour maintenir constante ou diminuer la vitesse de rotation (N) du rotor, jusqu'à la vérification d'une condition prédéterminée, sans commander l'allumage du moteur,
- après vérification de la condition prédéterminée, une étape (E6) d'accélération secondaire dans laquelle on commande le démarreur (4) pour augmenter la vitesse de rotation (N) du rotor, et
- une étape (E6) d'allumage dans laquelle on commande l'allumage du moteur (3).

2. Procédé de démarrage selon la revendication 1, dans lequel l'étape (E2, E3) d'accélération primaire est effectuée jusqu'à atteindre une vitesse de rotation prédéterminée (N₁).

3. Procédé de démarrage selon la revendication 2, dans lequel la vitesse de rotation prédéterminée (N₁) est inférieure à une première vitesse de rotation critique (N_{c}) de la turbomachine.

4. Procédé de démarrage selon l'une des revendications 1 à 3, dans lequel ladite condition prédéterminée est l'écoulement d'une durée (Δt) prédéterminée depuis le début de l'étape (E4, E5) d'homogénéisation thermique.

5. Procédé de démarrage selon la revendication 1, dans lequel l'étape (E2, E3) d'accélération primaire est effectuée jusqu'à détecter un niveau de vibration (S) supérieur ou égal à un premier niveau prédéterminé (S₁), ladite condition prédéterminée étant la détection d'un niveau de vibration (S) inférieur ou égal à un deuxième niveau prédéterminé (S₂) inférieur au premier niveau prédéterminé (S₁).

6. Procédé de démarrage selon l'une des revendications 1 à 5, dans lequel, lors de l'étape (E4, E5) d'homogénéisation thermique, on commande le démarreur (4) pour maintenir constante la vitesse de rotation (N) du rotor.

7. Procédé de démarrage selon l'une des revendications 1 à 5, dans lequel, lors de l'étape (E4, E5) d'homogénéisation thermique, on commande le démarreur (4) pour cesser d'entraîner le rotor en rotation.

8. Programme d'ordinateur (P1) comprenant des instructions pour la mise en oeuvre d'un procédé de démarrage selon l'une des revendications précédentes lorsque ledit programme d'ordinateur (P1) est exécuté par un ordinateur.

9. Unité électronique (2) comprenant une mémoire (6) dans laquelle est mémorisé un programme d'ordinateur (P1) selon la revendication 8.

10. Turbomachine (1) comprenant une unité électronique (2) selon la revendication 9, un moteur (3) à turbine à gaz incluant au moins un rotor et un démarreur (4) apte à entraîner le rotor en rotation.

## Patentansprüche

1. Verfahren zum Starten oder erneuten Starten einer Turbomaschine (1), das durch eine elektronische Einheit (2) durchgeführt wird, wobei die Turbomaschine (1) einen Gasturbinenmotor (3), der wenigstens einen Rotor enthält, und einen Starter (4), welcher geeignet ist, den Rotor drehanzutreiben, umfasst, **dadurch gekennzeichnet, dass** es als Reaktion auf den Empfang eines Startbefehls umfasst:
- einen Schritt (E2, E3) zur Primärbeschleunigung, bei dem der Starter (4) angesteuert wird, die Drehzahl (N) des Rotors zu erhöhen,
- einen Schritt (E4, E5) zur thermischen Homogenisierung, bei dem der Starter (4) angesteuert wird, die Drehzahl (N) des Rotors bis zur Erfüllung einer vorbestimmten Bedingung konstant zu halten oder zu verringern, ohne die Zündung des Motors zu betätigen,
- nach der Erfüllung der vorbestimmten Bedingung einen Schritt (E6) zur Sekundärbeschleunigung, bei dem der Starter (4) angesteuert wird, die Drehzahl (N) des Rotors zu erhöhen, und
- einen Schritt (E6) zum Zünden, bei dem die Zündung des Motors (3) betätigt wird.

2. Startverfahren nach Anspruch 1, bei dem der Schritt (E2, E3) zur Primärbeschleunigung bis zum Erreichen einer vorbestimmten Drehzahl (N₁) durchgeführt wird.

3. Startverfahren nach Anspruch 2, bei dem die vorbestimmte Drehzahl (N₁) geringer als eine erste kritische Drehzahl (N_{c}) der Turbomaschine ist.

4. Startverfahren nach einem der Ansprüche 1 bis 3, bei dem die vorbestimmte Bedingung das Verstreichen einer vorbestimmten Zeitdauer (Δt) seit dem Beginn des Schrittes (E4, E5) zur thermischen Homogenisierung ist.

5. Startverfahren nach Anspruch 1, bei dem der Schritt (E2, E3) zur Primärbeschleunigung bis zum Erfassen eines Schwingungspegels (S) größer oder gleich einem ersten vorbestimmten Pegel (S₁) durchgeführt wird, wobei die vorbestimmte Bedingung die Erfassung eines Schwingungspegels (S) kleiner oder gleich einem zweiten vorbestimmten Pegel (S₂), welcher geringer als der erste vorbestimmte Pegel (S₁) ist, ist.

6. Startverfahren nach einem der Ansprüche 1 bis 5, bei dem während des Schrittes (E4, E5) zur thermischen Homogenisierung der Starter (4) angesteuert wird, die Drehzahl (N) des Rotors konstant zu halten.

7. Startverfahren nach einem der Ansprüche 1 bis 5, bei dem während des Schrittes (E4, E5) zur thermischen Homogenisierung der Starter (4) angesteuert wird, das Drehantreiben des Rotors einzustellen.

8. Computerprogramm (P1), das Befehle für die Durchführung eines Startverfahrens nach einem der vorhergehenden Ansprüche, wenn das Computerprogramm (P1) durch einen Computer ausgeführt wird, umfasst.

9. Elektronische Einheit (2), die einen Speicher (6) umfasst, in dem ein Computerprogramm (P1) nach Anspruch 8 gespeichert ist.

10. Turbomaschine (1), die eine elektronische Einheit (2) nach Anspruch 9, einen Gasturbinenmotor (3), der wenigstens einen Rotor enthält, und einen Starter (4), welcher geeignet ist, den Rotor drehanzutreiben, umfasst.

## Claims

1. A method of starting or restarting a turbomachine (1), performed by an electronic unit (2), the turbomachine (1) comprising a gas turbine engine (3) including at least one rotor and a starter (4) suitable for driving the rotor in rotation, the method being **characterized in that** in response to receiving an order to start, it comprises:
• a primary acceleration step (E2, E3) during which the starter (4) is operated to increase the speed of rotation (N) of the rotor;
• a thermal homogenization step (E4, E5) during which the starter (4) is operated to keep the speed of rotation (N) of the rotor constant or to decrease it until a predetermined condition is satisfied, without ordering ignition of the engine;
• once the predetermined condition is true, a secondary acceleration step (E6) in which the starter (4) is operated to increase the speed of rotation (N) of the rotor; and
• an ignition step (E6) in which ignition of the engine (3) is ordered.

2. A method of starting according to claim 1, wherein the primary acceleration step (E2, E3) is performed until a predetermined speed of rotation (N₁) is reached.

3. A method of starting according to claim 2, wherein the predetermined speed of rotation (N₁) is less than a first critical speed of rotation (N_{c}) of the turbomachine.

4. A method of starting according to any one of claims 1 to 3, wherein said predetermined condition is a predetermined duration (At) elapsing since the beginning of the thermal homogenization step (E4, E5).

5. A method of starting according to claim 1, wherein the primary acceleration step (E2, E3) is performed until a level of vibration (S) is detected that is greater than or equal to a first predetermined level (S₁), said predetermined condition being detecting a level of vibration (S) that is less than or equal to a second predetermined level (S₂), itself less than the first predetermined level (S₁).

6. A method of starting according to any one of claims 1 to 5, wherein during the thermal homogenization step (E4, E5), the starter (4) is operated to keep the speed of rotation (N) of the rotor constant.

7. A method of starting according to any one of claims 1 to 5, wherein during the thermal homogenization step (E4, E5), the starter (4) is operated to cease driving the rotor in rotation.

8. A computer program (P1) including instructions for performing a method of starting according to any preceding claim, when said computer program (P1) is executed by a computer.

9. An electronic unit (2) including a memory (6) in which there is stored a computer program (P1) according to claim 8.

10. A turbomachine (1) comprising an electronic unit (2) according to claim 9, a gas turbine engine (3) including at least one rotor, and a starter (4) suitable for driving the rotor in rotation.
